**Europäisches Patentamt**

(19) **European Patent Office**

**Office européen des brevets**

(11) Veröffentlichungsnummer: **0 010 547**
**A1**

(12) # EUROPÄISCHE PATENTANMELDUNG

(21) Anmeldenummer: **78100458.5**

(22) Anmeldetag: **20.07.78**

(51) Int. Cl.³: **B 28 B 15/00**, B 65 G 49/00,
F 26 B 9/06

(43) Veröffentlichungstag der Anmeldung: **14.05.80**
**Patentblatt 80/10**

(84) Benannte Vertragsstaaten: **BE CH FR GB NL SE**

(71) Anmelder: **Skyva, Bernd, Dipl.-Ing.,
Wesselheideweg 101, D-5300 Bonn (DE)**

(72) Erfinder: **Skyva, Bernd, Dipl.-Ing.,
Wesselheideweg 101, D-5300 Bonn (DE)**

(54) **Einrichtung zur Herstellung von Bauelementen auf palettenartigen Formen.**

(57) Einrichtung zur Herstellung von Bauelementen auf palettenartigen Formen. Sie ist insbesondere für die Erzeugung von Betonfertigteilen geeignet und besteht aus einer Fördereinrichtung (1) und einer Anzahl übereinander angeordneter Einheiten zur Wärmebehandlung (4). In diese zu einem Block (2) zusammengefaßten Einheiten wird jeweils eine Form (3) eingebracht. Durch Beschickung und Entleerung in aufeinanderfolgenden Schritten wird ein kontinuierlicher Arbeitsablauf erzielt.

Das Wärmebehandlungsprogramm kann für jede Form (3) sofort beginnen und auf die Art des Fertigteils abgestimmt werden.

Die Fördereinrichtung (1) kann mit einem Kipprahmen (14) und Rüttelbalken (21) als Arbeitsbühne ausgebildet werden.

ACTORUM AG

0010547

- 1 -

Einrichtung zur Herstellung von Bauelementen auf palettenartigen Formen.

Die insbesonders zur Erzeugung von Betonfertigteilen dienende Einrichtung besteht aus einer Fördereinrichtung und einer Anzahl übereinander angeordneter Einheiten für eine Wärmebehandlung, wobei die Fördereinrichtung für die Bewegung jeweils einer Form in vertikaler Richtung zum Anheben auf das jeweilige Niveau der Einheiten zur Wärmebehandlung und für eine Verschiebung in horizontaler Richtung zum Einbringen der Formen in die Einheiten zur Wärmebehandlung ausgebildet ist.

Die bekannten Anlagen für die horizontale Herstellung und Schnellhärtung von Betonfertigteilen lassen sich in drei Gruppen einteilen:

erstens ortsfeste beheizbare Formen

zweitens Behandlungsräume, in denen mehrere Formen ge-

0010547

-2-

meinsam dem Wärmebehandlungsprozeß unterzogen werden
und drittens Behandlungsräume, durch die die Formen
horizontal oder vertikal bewegt werden.

Beheizbare Formen stellen z.B. die Palettenfertigungsbahn und der mit unterseitigen Heizschlangen versehene
Rütteltisch dar. Sie haben den Nachteil, bis zum Erhärten des Betons belegt zu bleiben und sind daher mit entsprechendem Platzbedarf verbunden.

Härtekammern oder Dampfgruben, in denen mehrere Formen gemeinsam der Wärmebehandlung unterzogen werden,
sind in vielfacher Weise bekannt. Das hiebei einzuhaltende Verfahren ist diskontinuierlich und mit dem Nachteil
verbunden, daß die Wärmebehandlung erst einsetzt, wenn
die jeweils letzte Form eingebracht ist. Es ist daher
insgesamt eine größere Anzahl von Formen erforderlich.
Deshalb findet dieses Prinzip nur bei großen Industrieanlagen mit Fertigungsstraßen , sogenannten Palettenumlaufbahnen und dergl. Anwendung. Um nicht zu große
Unterschiede in der Vorlagerungszeit zu haben, müssen
die Formen in kurzen Zeitabständen vorbereitet werden.

- 3 -

Es sind Ausführungen in der Praxis bekannt, bei denen zwischen dem Einbringen der ersten und letzten Form 4 Stunden liegen, woran die vorgenannten Nachteile ermessen werden können. Weiters sind die Möglichkeiten der Wärmebehandlung eingeschränkt; eine Infrarotstrahlung kann nicht angewendet werden.

Zu dieser Gruppe zählt eine Einrichtung nach der DE OS 2 208 908. Die Formen werden hier mit einer innerhalb des Behandlungsraumes befindlichen Hubeinrichtung gestapelt. Ebenfalls gemeinsam werden mehrere gestapelte Formen in einem Laderaum nach DE OS 2 034 205 gehärtet. Das Stapeln erfolgt hier durch eine außerhalb des Behandlungsraumes befindliche Fördereinrichtung ( Baukran ), die die Formen in den verschiedenen Höhen in den Behandlungsraum einbringt.

Die DE OS 1 584 315 stellt eine Lösungsform für das kontinuierliche Bewegen der Formen durch einen Behandlungsraum dar. Entsprechend der Tunnellänge , die noch in drei bis vier Zonen unterteilt ist, erfordert diese Lösungsform einen großen Platzbedarf und ist nur für große Kapazität geeignet. Fördereinrichtungen sind am Beginn und Ende des Tunnels nötig. Die gleichen Nachteile weist auch die transportable Anlage nach

- 4 -

der AT PS 247 769 auf.

Einer vertikalen Bewegung, die allerdings schrittweise erfolgt, durch den Behandlungsraum werden die Formen gemäß der DE OS 2 312 092 unterzogen. In der Hauptausführungsform sind verschiedene Fördereinrichtungen
für Aufwärts-, Querverschub- und Abwärtstransport inne r-
halb zweier Behandlungsräume vorgesehen. Auch hier ist
eine große Fertigungskapazität mit rascher Folge der
vorbereiteten Formen erforderlich. Die Arten der Wärmebehandlung sind eingeschränkt ( keine Infrarotstrahler
möglich ), und die Einhaltung eines genauen Behandlung s-
programmes innerhalb der beiden Zonen problematisch;
die Türen werden während der Behandlung geöffnet.

Aufgabe der Erfindung ist es, eine Einrichtung
zur Herstellung von Betonfertigteilen zu schaffen, die
kompakt ist und auch bei kleineren Stückzahlen wirtschaftlich arbeitet. Sie soll auch transportabel ausgeführt
werden können, um vor allem auf der Baustelle eingesetzt
zu werden. Daher müssen Abmessungen und Gewichte klein
gehalten werden. Die Formen sollen ohne Stillstandszeiten
und lange Transportwege ausgenützt werden. Vor allem

- 5 -

muß das Wärmebehandlungsprogramm sofort nach dem Einbringen und Verdichten des Betons je Form, ohne Abhängigkeit von weiteren gleichzeitig vorbereiteten Formen einsetzen.

Diese Aufgaben werden erfindungsgemäß dadurch gelöst, daß die Einheiten zur Wärmebehandlung als jeweils mit einer Klappe od. dgl. versehene, von ein-und derselben Seite her beschick-und entleerbare, zur Aufnahme einer einzigen Form ausgebildete Kammern ausgebildet sind, sodaß unter Beschickung und Entleerung in aufeinanderfolgenden Schritten ein kontinuierlicher Arbeitsablauf erzielbar ist, wodurch sich die Aufenthaltszeiten der Formen in den Kammern entsprechend der Anzahl der Kammern überlappen.

Der Vorzug dieser Einrichtung liegt darin, daß die Fertigteile unmittelbar nach dem Betonieren dem Wärmebehandlungsprogramm unterzogen werden. Gerade bei kleineren Fertigteilherstellungen ist diese individuelle Wärmebehandlung je Form besonders wichtig, da nicht große Stückzahlen vorhanden sind, wie sie die Voraussetzung bei Tunnelanlagen oder bei gemeinsamem Härten mehrerer Formen in einer Kammer notwendig sind.

0010547

Die Anzahl der Einheiten zur Wärmebehandlung kann so gewählt werden, daß ein kontinuierlicher Arbeitsablauf entsteht. So entsteht z.B. bei acht Einheiten und einem Wärmebehandlungsprogramm von vier Stunden eine Taktzeit von einer halben Stunde für das Armieren, Gießen und Entschalen der Fertigteile. Durch die Zusammenfassung in einem Block ergibt sich geringer Platzbedarf, optimale Ausnützung der Fördereinrichtung und wirtschaftlicher Betrieb. Es können fast alle bekannten Heizarten, wie Dampfinjektion, von einem Heizmedium durchströmte Heizkörper ( Heizschlangen ), Heißluft und Infrarotstrahlung bezw. deren Kombination angewendet werden. Je nach Behandlungsart kann durch Überströmkanäle mit Steuerung zwischen den einzelnen Fächern die Wärme weitergegeben werden.

Vor allem bei Fertigteilen geringer Stärke ist die Infrarothärtung die Technologie der Zukunft. Sie kann beim Erfindungsgegenstand in besonders vorteilhafter Weise angewendet werden.

Bei der erfindungsgemäßen Ausführung ist die Stellfläche äußerst gering. Energieverluste treten wegen der gestapelten Form und der kleineren Außenfläche weit weniger auf.

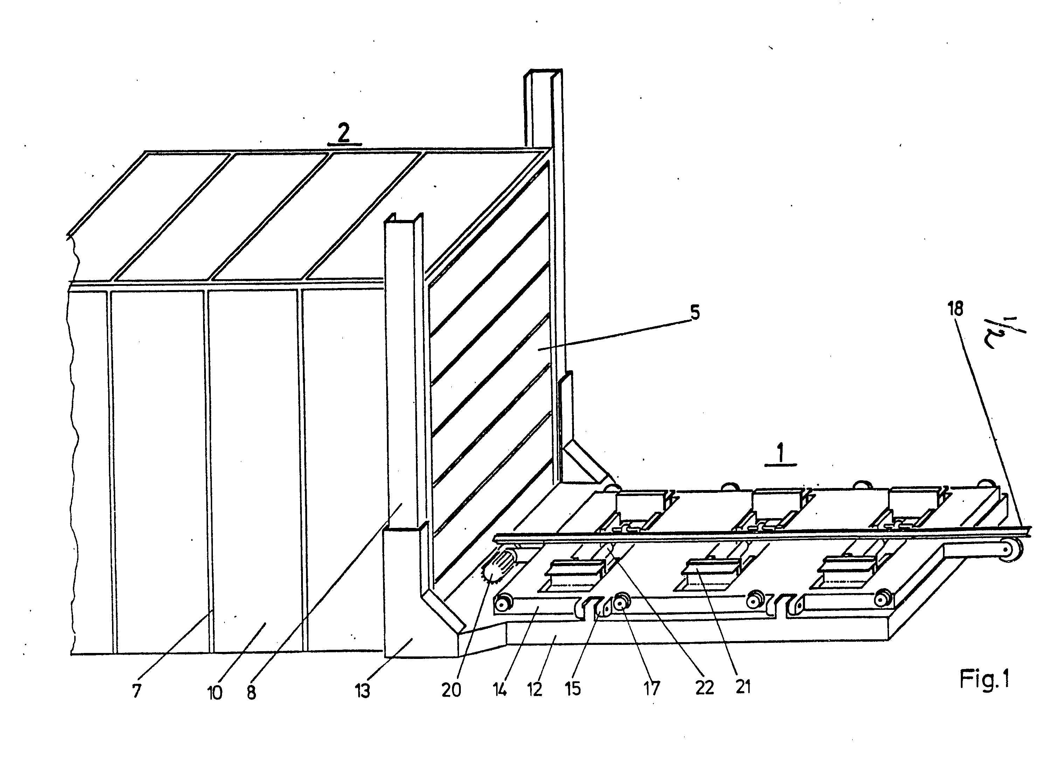

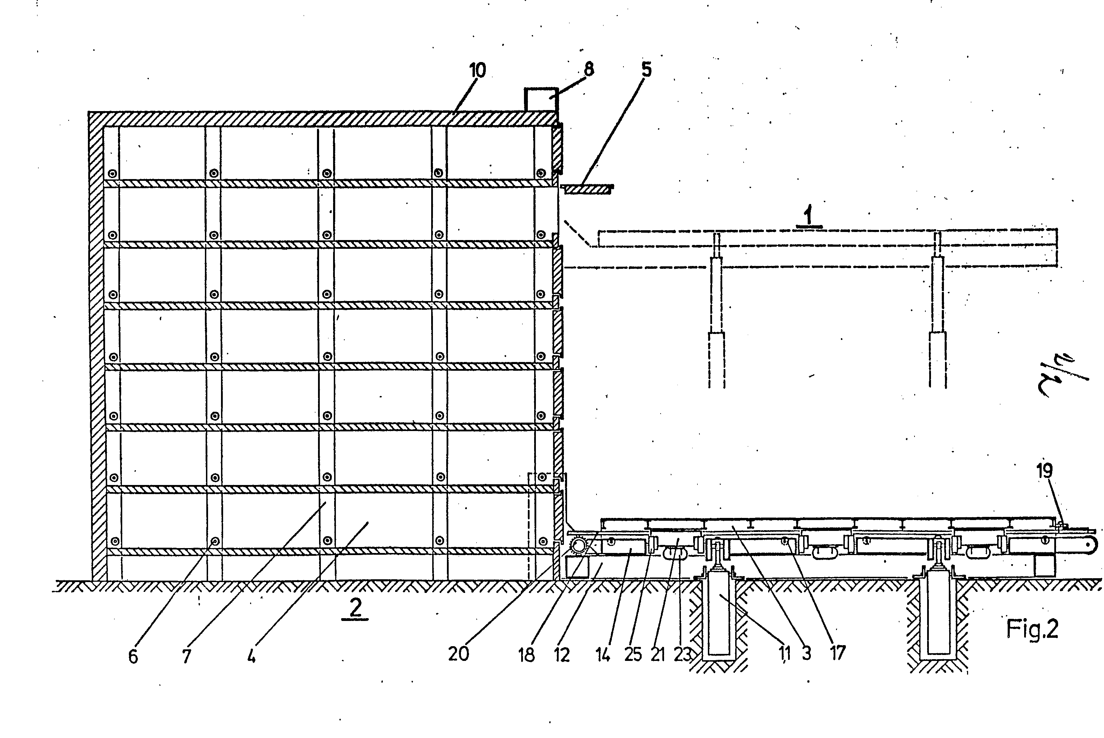

In der Zeichnung ist beispielsweie eine Ausführungsform des Erfindungsgegenstandes dargestellt, Fig.1 zeigt eine axonometrische Ansicht der Gesamtanlage ohne Form, Fig. 2 einen Längsschnitt mit Form.

Die Fördereinrichtung --1-- wird an zu einem Block --2-- zusammengefaßten, als Kammern --4-- ausgebildeten Einheiten zur Wärmebehandlung geführt. Diese sind mit einer stirnseitigen Klappe --5-- versehen und sind innen mit Rollen --6--, auf denen die Form --3-- ein-und ausgefahren wird, ausgerüstet. Diese Rollen sind vorzugsweise an den senkrechten Holmen --7-- der Konstruktion befestigt, wodurch eine direkte Lastabtragung gewährleistet wird. Die unbelasteten Wandplatten können als Sandwichplatten --1o-- ausgeführt sein. Die Fördereinrichtung --1-- wird an Führungsmasten --8--, die an beiden Seiten der Kammern --4--, --2-- befestigt sind, verfahren. Die Unterkonstruktion --12-- der Fördereinrichtung wird verwindungssteif ausgeführt und hat Führungsschenkel --13--, die mit mehreren Führungsrollen am Führungsmast --8-- laufen. Diese Ausführung stellt sicher, daß beim Ansprechen der Hubeinrichtung ( z.B. Hydraulikzylinder -11--) die Fördereinrichtung waagrecht bleibt und klemmungsfrei auf-und abgeführt werden kann.

0010547

- 9 -

Durch diese stabilisierende Inanspruchnahme des Blokkes der Einheiten zur Wärmebehandlung --2-- können
schwere Hubkonstruktionen erspart werden.

Beim dargestellten Ausführungsbeispiel ist die
Fördereinrichtung --1-- mit einem Kipprahmen --14--
ausgerüstet, der mit Gelenken --15-- an die Unterkonstruktion angeschlossen ist. Ist die Arretierung im
Eingriff, so wird bei Ansprechen der Hubzylinder --11--
die ganze Fördereinrichtung gehoben; ist sie geöffnet und die Unterkonstruktion --12-- festgesetzt, so wird
der Kipprahmen --14-- geneigt. Auf diesem Rahmen sind
Laufrollen --17--, auf denen die Paletten horizontal
verschoben werden, befestigt. Die Horizontalverschubeinrichtung besteht aus einem in der Führung --18-- beweglichen Läufer --19--, der über Seilzug oder Kette
durch einen Elektroantrieb --2o-- bewegt wird. Er hat
die Aufgabe, die Paletten in die Einheiten zur Wärmebehandlung --4-- zu schieben und wieder herauszuziehen.
Zu diesem Zweck ist am Palettenende eine Öse, in die
der Finger des Läufers einrastet.

Im Kipprahmen --14-- sind mindestens vier Rüttelbalken --21-- eingebaut. Sie haben Vibratoren --23-- angeflanscht und sind über Schwingmetalle elastisch auf Schieberahmen --25-- befestigt. Diese werden in schräg nach oben laufenden Führungen durch Hydraulikzylinder--22-- bewegt. Bei Ansprechen der Hydraulik wird die Palette durch die Rüttelbalken von den Laufrollen abgehoben. Die horizontale Bewegungskomponente bewirkt ein Verspannen mit Klauen.

Der Herstellungsablauf vollzieht sich wie folgt : Nach Einbringen der Armierung und des Betons in die Form in bekannter Weise durch Betonausbreitwagen oder dgl. wird die Spannvorrichtung --22-- für die Rüttelbalken --21-- betätigt, wobei die Form von den Laufrollen --17-- abgehoben wird. Nach erfolgtem Rüttelvorgang wird die Form --3-- durch die Fördereinrichtung --1-- in die Höhe der zu belegenden Kammer --4-- gehoben. Durch Lösen der Spannvorrichtung wird sie auf die Laufrollen --17-- abgesenkt und ist nun frei verschiebbar. Mit Hilfe der Horizontalverschubeinrichtung wird die Form in die Kammer --4-- eingefahren. Nach Schließen der Klappe --5-- kann das Wärmebehandlungsprogramm sofort beginnen. Die Fördereinrichtung führt zum folgenden Fach und zieht die dort befindliche Form mit dem behandelten Fertigteil heraus. Nach dem Absenken und Festsetzen der Fördereinrichtung sowie Eingreifen der Spannvorrichtung werden die Arretierungen des Kipprahmens gelöst. Nun werden die Hubzylinder betätigt und der Kipprahmen neigt sich in die gewünschte Stellung, wie sie für das Abheben des Fertigteiles nötig ist.

Nach dem Abheben des Fertigteiles mit dem (Bau-) Kran wird die Form wieder in die Horizontale gekippt, gesäubert und steht für den neuen Arbeitsgang zur Verfügung. Dieser setzt wie eingangs beschrieben ein.

Patentansprüche:

1. Einrichtung zur Herstellung von Bauelementen auf palettenartigen Formen, bestehend aus einer Fördereinrichtung (1) und einer Anzahl übereinander angeordneten abgeschlossenen Einheiten für eine Wärmebehandlung (4), wobei die Fördereinrichtung für die Bewegung jeweils einer Form (3) in vertikaler Richtung zum Anheben auf das jeweilige Niveau der Einheiten zur Wärmebehandlung und für eine Verschiebung in horizontaler Richtung zum Einbringen der Formen in die Einheiten zur Wärmebehandlung ausgebildet ist,

dadurch gekennzeichnet,

daß die Einheiten als jeweils mit einer Klappe (5) oder dergleichen versehene, von ein und derselben Seite her beschick- und entleerbare, zur Aufnahme einer einzigen Form ausgebildete Kammern (4) ausgebildet sind, sodaß unter Beschickung und Entleerung in aufeinanderfolgenden Schritten ein kontinuierlicher Arbeitsablauf erzielbar ist, wodurch sich die Aufenthaltszeiten der Formen (3) in den Kammern entsprechend der Anzahl der Kammern überlappen.

- 2 -

2. Einrichtung nach Patentanspruch 1 ,

daduch gekennzeichnet,

daß das Wärmebehanlungsprogramm in den Kammern (4) jeweils einzeln gesteuert wird,und daß die Wärmebehandlung für jede Form (3) jeweils sofort beginnen kann.

3. Einrichtung nach Patentanspruch 1 ,

dadurch gekennzeichnet,

daß der obere Teil der Fördereinrichtung (1) als Kipprahmen (14) ausgebildet ist, mit dem die Formen (3) nach der Schnellhärtung für das Abnehmen der Fertigteile gekippt werden.

4. Einrichtung nach Patentanspruch 1 und 3 ,

dadurch gekennzeichnet,

daß die Fördereinrichtung (1) elastisch aufgelagerte, mit Vibratoren (23) ausgerüstete Rüttelbalken (21) aufweist.

5. Einrichtung nach Patentanspruch 1, 3 und 4 ,

dadurch gekennzeichnet,

daß die Rüttelbalken (21) durch einen beispielsweise hydraulischen Antrieb dermaßen bewegt werden, daß sie die Form (3) von der Fördereinrichtung (1) abheben und elastisch trennen, sowie für Hub-, Rüttel- und Kippvorgang in der angehobenen Lage verspannen.

0010547

Fig.1

Fig.2

2/2

00 10547

| | Europäisches Patentamt | **EUROPÄISCHER RECHERCHENBERICHT** | Nummer der Anmeldung<br>EP 78 10 0458 |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 1 409 900 (SCHIMIZU)<br><br>* Seite 2, Zeilen 87-124; Seite 3, Zeilen 33-66, 101-119; Seite 6, Zeilen 93-118; Seite 7, Zeilen 78-93,102-106,113-130; Seite 8, Zeilen 1-28; Seite 9, Zeilen 11-31,56-61; Figuren 1,2,5,11-18,19 *<br><br>& DE - A - 2 259 410<br><br>-- | 1 |
| | FR - A - 1 343 461 (CAMUS)<br><br>* Seite 2, Spalte 1, Zeilen 41-44; Spalte 2, Zeilen 22-31; Seite 3, Spalte 1, Zeilen 21-25; Spalte 2, Zeilen 50-61; Seite 4, Spalte 1, Zeilen 1-13,43-61; Figuren 1,2 *<br><br>-- | 1,2 |
| | FR - A - 946 126 (PISCHINGER)<br><br>* Seite 1, Zeilen 16-31,45-54; Seite 1, Zeile 60 bis Seite 2, Zeile 4; Seite 2, Zeilen 12-14; Figuren 1,2 *<br><br>-- | 1,2 |
| | FR - A - 1 485 993 (WERNER)<br><br>* Seite 2, Spalte 2, Zeilen 2-7; Figuren 1,2 *<br><br>-- | 1 |
| | DE - C - 39 499 (BECHSTEIN)<br><br>* Seite 1, Spalte 1; Anspruch; Figuren *<br><br>--<br><br>./. | 1 |

### KLASSIFIKATION DER ANMELDUNG (Int.Cl.²)

B 28 B 15/00
B 65 G 49/00
F 26 B 9/06

### RECHERCHIERTE SACHGEBIETE (Int. Cl.²)

B 28 B
F 26 B
C 04 B

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>29-05-1979 | Prüfer<br>PASTUREL |
|---|---|---|

EPA form 1503.1   06.78

0010547

| Europäisches Patentamt | EUROPÄISCHER RECHERCHENBERICHT | Nummer der Anmeldung |
|---|---|---|
| | | EP 78 10 0458 |

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | FR - A - 1 418 301 (S.E.R.M.A.) <br> * Seite 3, Spalte 2, Zeilen 19-34; Figuren 6-8 * <br> -- | 3 | |
| | DE - A - 2 431 298 (RINTER) <br> * Seite 10, Zeilen 26-29; Seiten 11,12; Figuren 1,2,4 * <br> -- | 3 | |
| | DE - A - 2 546 360 (RIKER) <br> * Seite 8, Zeilen 35-38; Seite 9, Zeilen 1-22; Figuren 14,15,17 * <br> -- | 3-5 | RECHERCHIERTE SACHGEBIETE (Int. Cl.²) |
| D | AT - B - 247 769 (KESTING) <br> * Seite 2, Zeilen 1-7,32-35,45-48; Figuren 1,3 * <br> -- | 3 | |
| A | DE - A - 2 142 296 (GRIESE) <br> ---- | | |

EPA Form 1503.2   06.78